# EUROPEAN PATENT APPLICATION

(11) **EP 4 239 866 A1**
(43) Date of publication of application: **06.09.2023**
(21) Application number: 22159600.0
(22) Date of filing: 02.03.2022
(51) Int. Cl.: H02K 7/20, H02K 19/38, H02K 19/12, H02K 11/042, H02K 11/01, H02K 11/35, H02K 11/30, H02K 3/26

(54) **ELECTRIC MACHINE, AXIAL FLUX MOTOR, POWER SUPPLY UNIT, AND HOUSEHOLD APPLIANCE**

(71) Applicant: BSH Hausgeräte GmbH, 81739 München (DE)
(72) Inventor: Gula, Martin, 08501 Badejov (SK); Spisák, Peter, 07101 Michalovce (SK)

(57) **Abstract**

Disclosed are an electric machine, comprising an axial flux motor and a power supply unit, wherein the axial flux motor has a stator having a plurality of electric coils, and a rotor which is rotatably around a rotation axis relative to the stator and carrying a plurality of excitation coils, and wherein the power supply unit is adapted to energise inductively the excitation coils of the rotor, such that a magnetic field of the rotor can be adjusted, an axial flux motor, a power supply unit and a household appliance.

## Description

The invention refers to an electric machine having an axial flux motor and a power supply unit, to an axial flux motor, a power supply unit and to an electric household appliance.

Axial flux motors are known for many years and utilized in many practical applications. The rotor of axial flux motors known in the prior art features permanent magnets bonded onto the surface or embedded in the rotor structure. Their stator usually has coil windings, which are wound around poles or teeth comprised of either stacked electrical steel laminations or soft magnetic composites. One drawback of these permanent magnet bases axial flux motors is that the magnetic field in the rotor cannot be manipulated which results in a delimiting use.

It is an object of the invention to provide an electric machine enabling an adjustment of a rotor-side magnet field of an axial flux motor, an axial flux motor adapted to have different rotor-side magnet fields, a power supply unit adapted to provided power supply to an axial flux motor, and an electric household appliance that motor can be adjusted perfectly to a required load.

This object is solved by an electric machine with the features of claim 1, by an axial flux motor with the features of claim 8, with a power supply unit with the features of claim 9 and by a household appliance with the features of claim 10. Advantageous embodiments are disclosed in the dependent claims, the description and the figures.

According to the invention, an electrical machine comprises an axial flux motor and a power supply unit. The axial flux motor has a stator comprising a plurality of electric coils, and a rotor which is rotatably around a rotor axis relative to the stator and has a plurality of excitation coils. In addition, the power supply unit is adapted to energise inductively the excitation coils of the rotor.

A preferred axial flux motor which is adapted to be used in an axial flux machine according to the invention comprises a stator having a plurality of electric coils, and a rotor positioned rotatably around its rotation axis relative to the stator and having a plurality of excitation coils. The excitation coils replace the permanent magnets on the rotor-side, thus enabling individual adjustments of the rotor-side magnet field of the axial flux motor.

A preferred power supply unit which is adapted to be used in an axial flux machine according to the invention is adapted to energise inductively excitation coils of a rotor of an axial flux motor. The power supply unit can also be understood as a transmitter-receiver unit. The transmitter part is electrically connected with an external power source and the receiver part is electrically connected with the excitation coils of the axial flux motor. Both connections can be established by cables, whereas the electrical connection between the transmitter part and the receiver part in order to generate the power needed energise the excitation is established wireless, in particular inductively.

An advantage of the electric machine is that the magnetic field in the rotor(s) can be manipulated by adjustment of the excitation current, which provides potential of the axial flux motor for operations at a high efficiency and superb operational noise over the whole torque/speed scale. Both stator currents and the rotor current can be set to almost arbitrary combinations at numerous operating points, thus adapting the losses to the set operating point and other characteristics such as maximum current limit or thermal management of the motor.

Preferably, the power supply unit comprises a primary part (transmitting part) and a secondary part (receiving part), wherein the primary part has a power supply connection, at least one primary electrical coil, and/or an electrical circuit adapted to compensate magnetic parameters of the primary part, and to condition, to control and/or to modulate an excitation current for the primary part. The secondary part has at least one secondary electrical coil and/or an electrical circuit adapted to compensate magnetic parameters of the secondary part, and to condition and to control a power supply to the excitation coils of the rotor. The at least one primary coil and the at least one secondary coil can be moved relatively to each other and are separated locally from each other by an air gap. By means of this, an optimised adjustment of the axial flux motor can be realised as both the primary part and the secondary part are monitoring and controlling each other

In order to avoid any negative impact on the axial flux motor by electromagnetically influences which arises by producing the current needed for the excitation coils of the rotor via the primary part and the secondary part of the power supply unit (transmitter-receiver unit), at least the electrical coils of the primary part and of the secondary parts are electromagnetically shielded to the environment.

Preferably, the data between the primary part and the secondary part is transferred wireless in order to avoid any data cable connection. Therefore, both the primary part and the secondary part of the power supply unit can comprise a wireless data transfer element in order to communicate at least with each other. In addition, the wireless data transfer element can be used to transfer data to a monitoring and/or controlling system and/or to receive data from a monitoring and/or controlling system. The data transfer elements can also be understood as wireless control signal communicators.

By means of positioning the secondary part on the rotor axis of the axial flux rotor, the axial flux machine can be designed very compact.

In order to establish a safe power supply from the power supply unit (transmitter-receiver unit) to the excitation coils of the rotor, a cable connection can be provided that preferably runs on and/or in the motor shaft (5).

In one embodiment, at least some coils, for instance the primary coils and or the excitation coils, are provided on or are integrated in a printed circuit board (PCB). Such printed circuit board has a plurality of layers that are spaced apart from each other in axial direction of the axial flux motor and at least some of the layers comprise at least one coil winding, wherein the coil windings are electrically connected with another. By means of this, the coils can be built very compact compared to coil windings.

According to the invention, an electric household appliance comprises an inventive axial flux machine. The motor of such household appliance can be adjusted perfectly to a required load.

In other words, an axial flux drive is proposed which permanent magnets has been replaced by excitation coils in the rotor(s) through which a direct electric current flows, thus generating the rotary magnetic field. Such machine could be described as Externally Excited Axial Flux Motor, EEAFM. A traditional approach would supply the direct current to the rotor windings via a conductive connection using carbon brushes and slip rings. However, such approach results in sliding friction and corresponding electrically conductive abrasion, possibly generating an unwanted electromagnetic and/or even acoustic noise, as well as necessity to replace the abrasive parts after they have reached their service life limit. This invention proposes the replacement of these traditional techniques by using contactless conductive transmission of electrical power to the rotor(s), thus combining the high efficiency and torque of an axial flux drive with maintenance free power supply to the rotor(s).

The present invention provides a magnet-free axial flux brushless electrical machine including:
- A stator, with electromagnetic coil windings wound around stacked electrical steel laminations or poles made of soft magnetic composites, or planar windings formed on a multilayer printed circuit board and/or made by any other technique, inclusive additive manufacturing techniques.
- At least one rotor, including an array of excitation coils. Either the coils are wound, using traditional construction methods or they are formed as planar windings on a printed circuit board and/or made by any other technique, inclusive additive manufacturing techniques.
- Inductive wireless transmitter-receiver (rotary transformer), consisting of a rotary winding and a stationary winding, both made by any available technique and form, separated by an air gap (axial, radial or any other angle gap relative to motor rotation axis).
- Magnetic sleeve for rotary transformer made of a magnetically soft material (usually sintered ferrite powder or any other suitable material), and/or of a non-magnetic material.
- Primary electronics for compensating magnetic parameters of primary part of inductive transmitter to achieve optimal transmission parameters.
- Primary electronics for conditioning and controlling and/or modulating the excitation current for the primary part of inductive transmitter.
- Secondary electronics for compensating magnetic parameters of secondary part of inductive transmitter to achieve optimal transmission parameters.
- Secondary electronics for rectifying of the AC voltage from secondary part of inductive transmitter into DC voltage and/or modulated DC voltage for feeding the magnetic coils of the rotor(s).
- Secondary electronics for conditioning/controlling the power supply of rotor electromagnetic coils.

One component of the inductive power transmission system is a rotary transformer, which provides contact-free transmission of energy to the rotor(s) of the axial flux drive. The rotary part of that transformer and its stationary part are separated by an air gap, which can be of radial, axial and/or angle tilted relatively to motor rotating axis nature, depending on the particular design of the rotary transformer. Both stationary part and rotary part, with magnetic coils typically, but not exclusively formed on a printed circuit board, are shielded typically, but not exclusively by a two-part magnetic sleeve made of a magnetically soft material which increases the coupled inductivity between these two windings, guides the magnetic flux and prevents energy losses and/or prevents unwanted electromagnetic noise emission.

The electronic for wireless controlling and energizing the motor rotor (wireless transmitter-receiver unit) may consist of at least two mayor parts: primary, stationary transmitter part and secondary, rotating receiver part.

The transmitter part may comprise:
- Electric circuit to condition supplying voltage into the form suitable for wireless transmission (primary conditioner).
- Electromagnetic transmitting coils with necessary compensating and correcting electronic parts to tune the coils for maximum transmitting efficiency (primary coils).
- Additional electronic circuitry for respective modulating transmitted energy supply for further controlling of magnetic field produced by motor rotor (primary controller).
- Stationary or stationary part of electromagnetic and mechanical shielding of wireless transmitter-receiver, if used (stationary shielding).

The primary conditioner may comprise at least:
- Input A/C voltage rectifier, if the motor is powered by A/C voltage supply of arbitrary voltage, frequency and phase composition, or input DC conditioner (if the motor is DC powered).
- Step-up frequency inverter of arbitrary design to produce A/C voltage in (typically) kilohertz frequency range from rectified (or directly supplied D/C voltage), suitable for wireless energy transmission.

The primary coils may consist at least of:
- Electromagnetic coil or coils wound from electrically conductive wire in whichever form or formed on printed circuit board (PCB) on one PCB layer or within PCB multilayer structure and/or within their said combination. The coil or coils may have electromagnetic core or cores formed from diamagnetic material (typically, but not exclusively from air, PCB core material, plastic material) and/or made from any magnetically soft material (typically, but not exclusively from sintered ferrite), or combination of both.
- Electronic parts used for electromagnetic tuning, compensating and correcting the said coil(s) for maximum transmitting efficiency and/or for minimum parasitic electromagnetic emission.

The primary controller may consist of:
- Electronics parts intended for further modulating of A/C voltage produced by said step-up frequency inverter to control the magnetic field in motor rotor part typically, but not exclusively, for following purposes: fine tuning of electromagnetic motor properties, mechanical motor properties, acoustic noise optimizing produced by motor, parasitic electromagnetic emission emitted by motor.
- Wireless control signal communicator (data transfer element) communicating the control signals over said rotational transformer or by any other wireless technique to Secondary Controller

The primary shielding may consist at least of:
- Electromagnetic shielding consisting from one or several parts of magnetically soft material and/or of a non-magnetic material of an arbitrary form, made from whichever magnetically soft material and/or of a non-magnetic material to encapsulate wireless transmitter-receiver to suppress parasitic electromagnetic emission and/or to tune- up and increase efficiency of wireless energy transmission to motor rotor part.
- Mechanical shielding, which may be an additional part to electromagnetic shielding or the same said shielding, to mechanically protect and/or support wireless transmitter-receiver and/or its part.

The receiver part may comprise:
- Electromagnetic receiving coil or coils with necessary compensating and correcting electronic parts to tune the coils for maximum transmitting efficiency (secondary coils).
- Electric circuit to rectify received voltage to supply motor rotor (secondary rectifier)
- Electric circuit to control and modulate the rectified voltage (secondary controller)
- Electric circuit for wireless communication with Primary Controller either via said rotational transformer and/or via any other wireless way (secondary wireless control signal communicator (data transfer element).
- Rotating or rotating part of electromagnetic shielding of wireless transmitter-receiver, if used (rotary shielding).
- secondary mechanical shielding, rotating and/or non/rotating, which may be an additional part to electromagnetic shielding or the same, said shielding.
- Mechanic strengthening construction (fixing construction) to fix, strengthen and mechanical balancing the rotating electromagnetic part against high-speed rotation.

Secondary coils may consist at least of:
- Electromagnetic coil or coils wound from electrically conductive wire in whichever form or formed on printed circuit board (PCB) on one PCB layer or within PCB multilayer structure and/or within their said combination. The coil or coils may have electromagnetic core or cores formed from diamagnetic material (typically, but not exclusively from air, PCB core material, plastic material) and/or made from any magnetically soft material (typically, but not exclusively from sintered ferrite).
- Electronic parts used for electromagnetic tuning, compensating and correcting the said coils for maximum transmitting efficiency and/or for minimum parasitic electromagnetic emission.

The secondary rectifier may consist at least of:
- Received A/C voltage rectifier of arbitrary design and phase composition to rectify the transmitted energy into a D/C voltage to supply the motor rotor.

The secondary shielding may consist of:
- One or several parts of magnetically soft material and/or of a non-magnetic material of arbitrary form, made from whichever magnetically soft material to encapsulate wireless transmitter-receiver to suppress parasitic electromagnetic emission and/or to tune-up and increase efficiency of wireless energy transmission to motor rotor part.

The fixing construction may consist of:
- Mechanical structure or particular fixing structure parts to strengthen mechanically fix and mechanically balance the rotating parts of wireless transmitter-receiver.

Again, an axial flux rotary energy device according to the invention preferably comprises: a rotor comprising an axis of rotation and a plurality of excitation coils; a stator coaxial with the rotor; an inductive wireless transmitter-receiver (rotary transformer), consisting of a rotary winding and a stationary winding, separated by an air gap; primary electronics for compensating magnetic parameters of the primary part of the inductive transmitter, conditioning and controlling and/or modulating the excitation current for the primary part of the inductive transmitter; secondary electronics for compensating magnetic parameters of secondary part of inductive transmitter, conditioning/controlling the power supply of electromagnetic coils of the rotor.

The stator can comprise a printed circuit board (PCB) having a plurality of layers that are spaced apart in an axial direction, each PCB layer comprises an electromagnetic coil winding representing a single electrical phase, with electrical connections, electrically coupling it to another coil.

The stator can comprise a printed circuit board (PCB) having a plurality of layers that are spaced apart in an axial direction, wherein each PCB layer comprises a plurality of planar electromagnetic coil windings, with electrical connections, electrically coupling it to another coil located in the same, or in a different PCB layer.

The stator can comprise a printed circuit board (PCB) having a plurality of layers that are spaced apart in an axial direction, wherein the electromagnetic coil windings in each coil pair are located on different PCB layers, with electrical connections, electrically coupling it other coils located in the same, or in a different PCB layer.

The electromagnetic coil windings can be wound around poles consisting of stacked electrical steel laminations.

The electromagnetic coil windings can be wound around poles made of soft magnetic composites or any other pressed powder material.

The electromagnetic coil windings can be wound around poles made by any other technique, inclusive additive manufacturing techniques.

The coils for each electrical phase can be angularly offset from each other within the particular PCB layers in order to create a desired phase angle shift between the electrical phases.

The rotor excitation coils can be wound around poles consisting of stacked electrical steel laminations.

The rotor excitation coils can be wound around poles made of soft magnetic composites or any other pressed powder material.

The rotor excitation coils can be formed as planar windings on a printed circuit board (PCB).

The rotor excitation coils can be made by any other technique, inclusive additive manufacturing techniques.

The device according to the invention can include multiple of rotors and/or stators created using any of the mentioned techniques.

The rotary winding and a stationary winding in the wireless transmitter-receiver can be separated by an axial air gap, relative to motor rotation axis.

The rotary winding and a stationary winding in the wireless transmitter-receiver unit can be separated by a radial air gap, relative to motor rotation axis.

The rotary winding and a stationary winding in the wireless transmitter-receiver unit can be separated by an angle tilted/skewed air gap, relative to motor rotation axis.

The rotary winding and a stationary winding in the wireless transmitter-receiver unit can be shielded by a magnetic sleeve made of magnetically soft material (usually sintered ferrite powder or any other suitable material).

The stationary winding of the wireless transmitter-receiver unit can be energized by the primary electronics circuit comprising at least following essential parts: AC and/or DC input electronics, primary electric energy conditioning electronics, stationary winding coils compensating electronics; delivering the energy stationary winding to be further transmitted to rotary winding of the said wireless transmitter-receiver.

The stationary winding of the wireless transmitter-receiver unit can be energized by the primary electronics circuit which may comprise additional, optional parts: primary controller electronics, primary wireless signal communicator electronics; further manipulating the energy for stationary winding to be further transmitted to rotary winding of the said wireless transm itter-receiver.

The rotary winding of the wireless transmitter-receiver unit can produce the electrical energy for motor rotor coils via secondary electronics circuit comprising at least following essential parts: secondary, rotary winding coils compensating electronics, secondary rectifier electronics, DC output electronics; delivering the energy to motor rotor coils.

The rotary winding of the wireless transmitter-receiver unit can produce the electrical energy for motor rotor coils via secondary electronics circuit which may comprise additional, optional parts: secondary controller electronics, secondary wireless signal communicator electronics; further manipulating the energy used for energizing of motor rotor coils.

The rotary energy device is at least one of a generator or a motor.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure. Shown is schematically in
- Fig. 1: a schematic view of an embodiment of an electrical machine according to the invention,
- Fig. 2: a cross-sectional view of an axial flux motor shown in figure 1,
- Fig. 3: an exploded view of the axial flux motor,
- Fig. 4:: an exploded view of a power supply unit shown in figure 1,
- Fig. 5:: electronic elements of a primary part of the power supply unit, and
- Fig. 6:: electronic elements of a secondary part of the power supply unit.

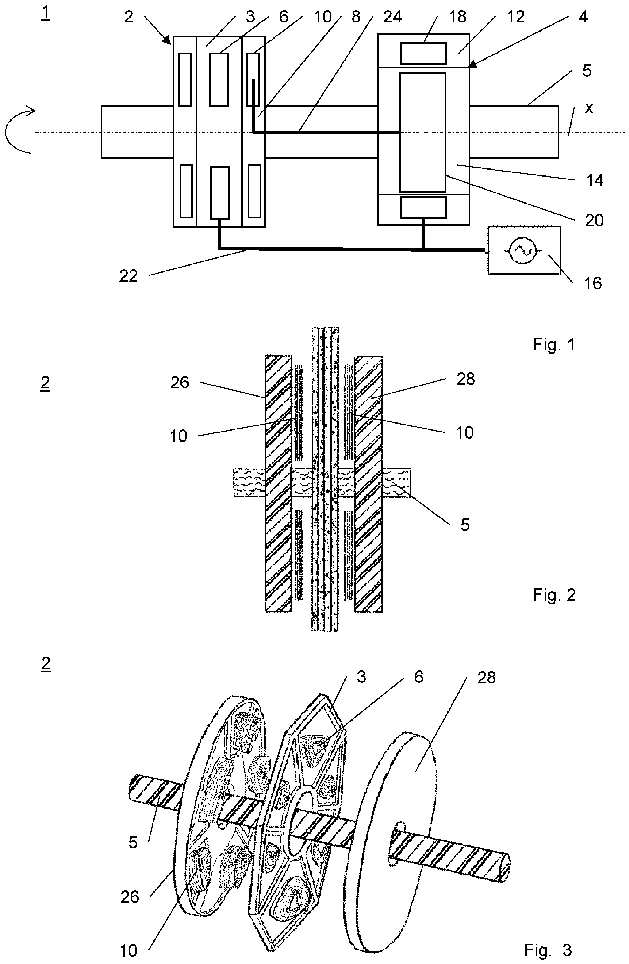

In figure 1 an inventive electric machine 1 is shown. The machine 1 comprises an axial flux motor 2 and a power supply unit 4, also called as transmitter-receiver unit.

Both the axial flux motor 2 and the power supply unit 4 are having the same central machine shaft 5 which defines a rotation axis x of their rotor-side elements.

The axial flux motor 2 has a stator 3 having a plurality of electric coils 6 and a rotor 8 which rotates around the rotation axis x when the machine shaft 5 is turning relative to the stator 3. The rotor 8 has a plurality of excitation coils 10.

The power supply unit 4 is adapted to energise inductively the excitation coils 10 of the rotor 8. The power supply unit 4 comprises a primary part 12 (transmitting part) and a secondary part 14 (receiving part). The primary part is 12 electrically connected with a power supply source 16 and has at least one primary electrical coil 18. The secondary part 14 has at least one secondary electrical coil 20. The at least one secondary coil 20 is separated locally from the primary electrical coil 18 by an air gap and can rotate relatively to the at least one primary electrical coil 18 around the rotation axis x when the machine shaft 5 is turning.

The power supply unit 4 is connected with the power source 16 via an electric cable 22. During operation, the at least one primary electrical coil 18 is energised and a relative movement appears during the at least one primary electrical coil 18 and the at least one secondary coil 20. This causes a magnetic field that, based on inductivity, energised the at least one secondary coil 20. The current, which is then generated by the at least one secondary coil 20, is transferred to the excitation coils 10 of the rotor via an electric cable 24 in the rotor shaft 5. Preferably, the electric coils 6 of the stator 3 of the axial flux motor 2 are also electrically connected with the power source via the cable 22 in order to energise them.

Figures 2 and 3 show a cross-sectional view (figure 2) and an exploded view (figure 3) of an example of the axial flux motor 2 according to the invention. Two rotatable rotor discs 26, 28 are carrying the excitation coils 10. Between the two rotor discs 26, 28, a part of the stator 3 is positioned. The part of the stator 3 carries the electric coils 6, which, in the shown embodiment, are made from multilayer printed circuit board (PCB) core material with coils formed on it. The excitation coils 10 of the rotor discs 26, 28 are for instance wound wire coils.

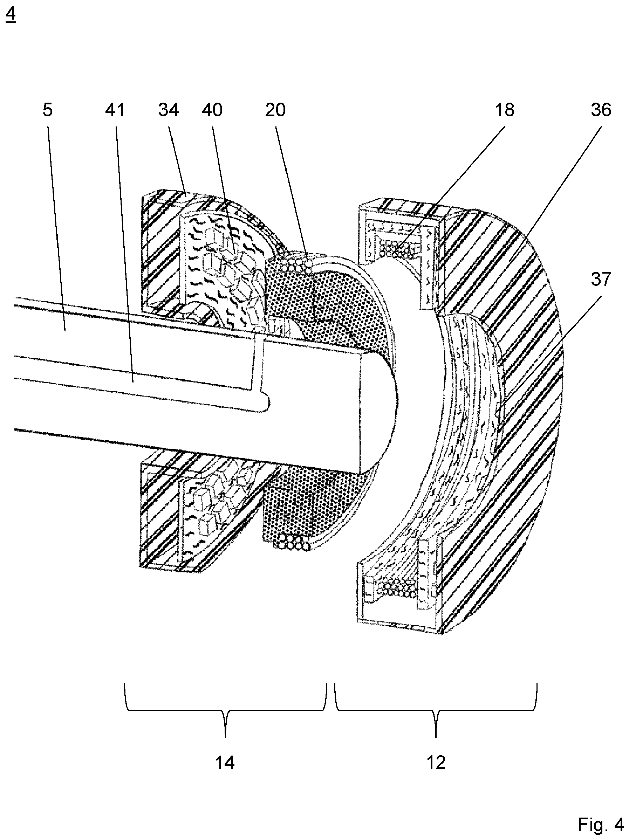

In figure 4 an exploded view of the power supply unit 4 is shown. The power supply unit 4 shown here is a rotational, radial type of wireless transmitter-receiver unit. The primary part 12 is static and does not move during the electric machine operation. The secondary part 14, except a secondary electromagnetically shielding 34, moves with motor rotor shaft 5 and other rotor parts during the operation of the electric machine 1.

The primary part 12 consists of a primary shielding 36 forming a kind of cover and housing the at least one primary electrical coil 18 and primary electronics 37. The primary shielding 36 comprises an electromagnetic shielding made from whichever magnetically soft material to encapsulate the power supply unit 4 to suppress parasitic electromagnetic emission and/or to tune-up and increase efficiency of wireless energy transmission to the rotor of the axial flux motor 2 In addition, the primary shielding 36 consists of mechanical shielding, which may be an additional part to electromagnetic shielding 36 or the same.

The secondary part 14 has a secondary shielding 34 forming a kind of cover and housing the at least one secondary electrical coil 20 and secondary electronics 40. The secondary shielding 34 comprises an electromagnetic shielding made from whichever magnetically soft material to encapsulate the power supply unit 4 to suppress parasitic electromagnetic emission and/or to tune-up and increase efficiency of wireless energy transmission to the rotor of the axial flux motor 2 In addition, the secondary shielding 34 consists of mechanical shielding which is adapted to strengthen the construction regarding fixation and mechanical balancing of the rotating electromagnetic part against high-speed rotation.

When assembled, the at least primary electrical coil 18 and the at least one secondary coil 20 are overlapping axially. In radial direction, the coils 18, 20 are spaced apart from each other by a constant radial gap.

In the machine shaft 5 a channel 41 can be provided for receiving the electric cable 24 between the secondary part 14 of the power supply unit 4 and the excitation coils 10 of the axial flux motor 2.

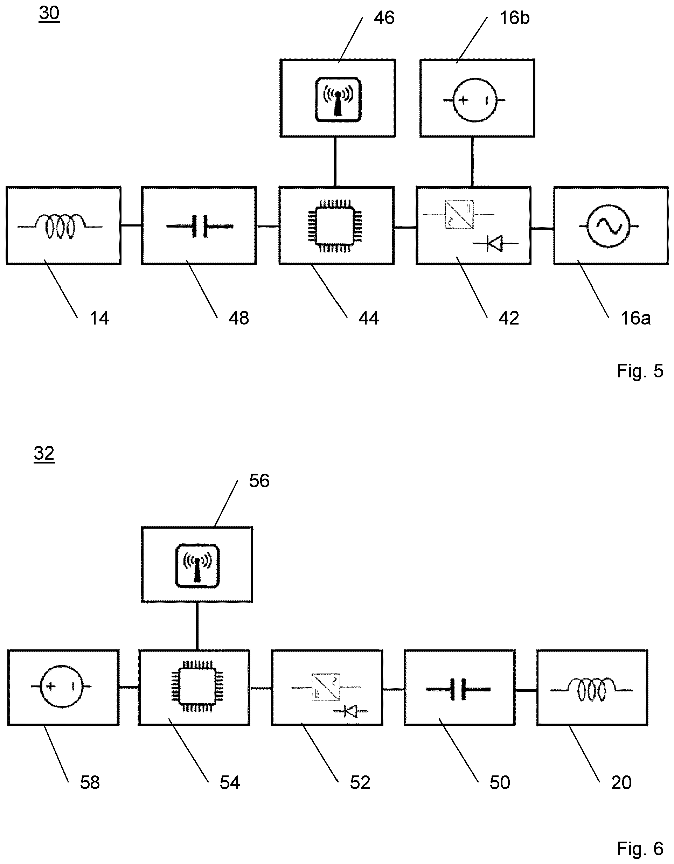

Figure 5 shows a preferred electric circuit 30 of the of the primary part 12 of the power supply unit 4. The elements 37 (16a, 16b, 18, 42, 44, 46, 48) illustrated in figure 5 are mentioned exemplary. Not all the elements 16a, 16b, 18, 42, 44, 46, 48 are essential for the machine operation, some of them may be optional. In addition, the schematics may comprise some additional electronic elements, not shown.

The primary part 4 is either energised by an AC power source 16a or alternatively by a DC power source 16b.

The electric current is feed to a primary conditioner 42. The primary conditioner 42 comprises an input A/C voltage rectifier, if the power supply unit 4 is powered by A/C voltage supply. If the power supply unit 4 is DC powered, the primary conditioner 42 is an input DC conditioner. Additionally, the primary conditioner 42 comprises a step-up frequency inverter to produce A/C voltage in, for instance, kilohertz frequency range from rectified or directly supplied D/C voltage.

After the primary conditioner 42, a primary controller 44 is provided. The primary controller 44 comprises electronics elements intended for further modulating of the A/C voltage produced by the step-up frequency inverter of the primary conditioner 42 to control the magnetic field in the rotor 8 of the axial flux motor 2 typically, but not exclusively, for following purposes: fine tuning of electromagnetic motor properties, mechanical motor properties, acoustic noise optimizing produced by motor, parasitic electromagnetic emission emitted by motor.

In order to communicate signals from the primary controller 44 to a secondary controller 54 of the second part 14 of the supply unit 4 or to communicate with any other external adequate element, a primary data transfer element 46, in particular a primary wireless control signal communicator, is provided. The primary data transfer element 46 can be directly linked with the primary controller 44.

The primary controller 44 is followed by a primary coil compensator 48. The primary coil compensator 48 forms an electrical element of the primary electrical coils 16 and is used beside other not shown electrical elements for electromagnetic tuning, compensating and correcting the primary electrical coil(s) for maximum transmitting efficiency and/or for minimum parasitic electromagnetic emission.

Finally, the at least one primary coil 14 itself is provided.

Figure 6 shows a preferred electric circuit 32 of the secondary part 14 of the power supply unit 4. The elements 40 (20, 50, 52, 54, 56, 58) illustrated in figure 6 are mentioned exemplary. Not all the elements 20, 50, 52, 54, 56, 58 are essential for the operation of the machine 1, some of them may be optional. In addition, the schematics may comprise some additional electronic elements, not shown.

First, the at least one secondary electrical coil 20 is provided. The secondary electrical coil 20 comprises a secondary compensator 50 which is used beside other not shown electrical elements for electromagnetic tuning, compensating and correcting the secondary electrical coil(s) for maximum transmitting efficiency and/or for minimum parasitic electromagnetic emission.

The at least one secondary electrical coil 20 and its electrical elements 50 are followed by a secondary rectifier 52. The secondary rectifier 52 receives is an A/C voltage rectifier and is used to rectify the transmitted energy into a D/C voltage to supply the axial flux motor 2 with electrical power, in particular its excitation coils 10.

After the secondary rectifier 52, the secondary controller 54 is provided. The secondary controller 54 comprises electronic elements to control and modulate the rectified voltage. Examples are fine tuning of electromagnetic motor properties, mechanical motor properties, acoustic noise optimizing produced by motor, parasitic electromagnetic emission emitted by motor.

In order to communicate signals from the secondary controller 54 to the primary controller 44 of the supply unit 4 or vis versa or to communicate with any other external adequate element, a secondary data transfer element 56, in particular a secondary wireless control signal communicator, is provided. The secondary data transfer element 56 can be directly linked with the secondary controller 54.

Finally, the generated and adjusted electrical current is used for powering the excitation coils 10 of the axial flux motor 2. Therefore, a DC output 58 is provided which is or can be connected with the cable 24 shown in figure 1 that leads to the excitation coils 10.

Disclosed are an electric machine, comprising an axial flux motor and a power supply unit, wherein the axial flux motor has a stator having a plurality of electric coils, and a rotor which is rotatably around a rotation axis relative to the stator and carrying a plurality of excitation coils, and wherein the power supply unit is adapted to energise inductively the excitation coils of the rotor, such that a magnetic field of the rotor can be adjusted, an axial flux motor, a power supply unit and a household appliance.

### Reference list

- 1: electric machine
- 2: axial flux motor
- 3: stator
- 4: power supply unit / transmitter-receiver unit
- 5: machine shaft
- 6: electric coils of motor stator
- 8: rotor of the axial flux motor
- 10: excitation coils of the motor
- 12: primary part of the power supply unit
- 14: secondary part of the power supply unit
- 16: power supply source
- 16b: power supply source (AC)
- 16a: power supply source (DC)
- 18: primary electrical coil of the primary part
- 20: secondary electrical coil of the secondary part
- 22: cable between power source and primary part
- 24: cable between secondary part and excitation coils
- 26: rotor disc
- 28: rotor disc
- 30: electric circuit of the primary part
- 32: electric circuit of the secondary part
- 34: secondary shielding
- 36: primary shielding
- 37: primary electronics
- 38: shielding
- 40: secondary electronics
- 41: cable channel
- 42: primary conditioner
- 44: primary controller
- 46: primary data transfer element / wireless control signal communicator
- 48: primary coil compensator
- 20: secondary electrical coil of the secondary part
- 50: secondary coil compensator
- 52: secondary rectifier
- 54: secondary controller
- 56: secondary data transfer element / wireless control signal communicator
- 58: DC power output

- x: rotation axis

## Claims

1. An electric machine (1), comprising:
• an axial flux motor (2) and
• a power supply unit (4),
wherein the axial flux motor (2) has
• a stator (3) having a plurality of electric coils, and
• a rotor (8) which is rotatably around a rotation axis (x) relative to the stator (3) and carrying a plurality of excitation coils (10), and
wherein the power supply unit (4) is adapted to energise inductively the excitation coils (10) of the rotor (8).

2. The electric machine according to claim 1, wherein the power supply unit (4) comprises a primary part (12) and a secondary part (14), wherein the primary part (12) has
• a power supply connection (22),
• at least one primary electrical coil (6), and/or
• an electrical circuit (30) adapted to compensate magnetic parameters of the primary part (12), and to condition, to control and/or to modulate an excitation current for the primary part (12), and wherein the
secondary part (14) has
• at least one secondary electrical coil (20) and/or
• an electrical circuit (32) adapted to compensate magnetic parameters of the secondary part (14), and to condition and to control a power supply to the excitation coils of the rotor, wherein
the at least one primary coil (18) and the at least one secondary coil (20) can be moved relatively to each other and are separated locally from each other by an air gap.

3. The electric machine according to claim 2, wherein at least the electrical coils (18, 20) of the primary part (12) and of the secondary parts (14) are electromagnetically shielded to the environment.

4. The electric machine according to claims 2 or 3, wherein both the primary part (12) and the secondary part (14) comprise a wireless data transfer element (46, 56).

5. The electric machine according to claims 2, 3 or 4, wherein the secondary part (14) is located on a motor shaft (5) defining the rotation axis (x).

6. The electric machine according to any of the preceding claims, wherein the current produced by the power supply unit (4) is supplied to the excitation coils (10) of the rotor (8) by a cable connection (24) that runs on and/or in the motor shaft (5).

7. The electric machine according to any of the preceding claims 2 to 6, wherein at least some coils (6, 10) are provided by on printed circuit board, wherein the printed circuit board has a plurality of layers that are spaced apart from each other in axial direction and at least some of the layers comprise at least one coil winding, wherein the coil windings are electrically connected with another.

8. An axial flux motor (2) to be adapted to be used in an electric machine (1) according to one of the preceding claims, comprising a stator (3) having a plurality of electric coils (6), and a rotor (8) positioned rotatably around its rotation axis (x) relative to the stator (3) and having a plurality of excitation coils (10).

9. A power supply unit (4) to be adapted to be used in an electric machine (1) according to one of the preceding claims and to energise inductively excitation coils (10) of a rotor (8) of an axial flux motor (2).

10. An electric household appliance comprising an electric machine (1) according to one of the preceding claims 1 to 7.
